# EUROPEAN PATENT SPECIFICATION

(11) **EP 0 603 956 B1**
(45) Date of publication and mention of the grant of the patent: **06.11.1996**
(21) Application number: 93203557.9
(22) Date of filing: 17.12.1993
(51) Int. Cl.: C08F 297/02, C10M 145/14, C10M 149/06

(54) **Viscosity-index improver**
Viskositätsindexverbesserer
Agent améliorant l'indice de viscosité

(30) Priority: 21.12.1992 US 993739
(43) Date of publication of application: 29.06.1994
(73) Proprietor: SHELL INTERNATIONALE RESEARCH MAATSCHAPPIJ B.V., 2596 HR Den Haag (NL)
(72) Inventor: Sutherland, Robert Jude, Houston, Texas 77095 (US); Dubois, Donn Anthony, Houston, Texas 77079 (US)

(56) References cited:
- EP-A- 0 458 379

## Description

The present invention relates to linear block copolymers, a process for their preparation, lubricating oil compositions containing them and their use as viscosity-index improver additives.

Linear block copolymers of styrene and hydrogenated isoprene having the block structures styrene-hydrogenated isoprene (S-EP) or hydrogenated isoprene-styrene-hydrogenated isoprene (EP-S-EP) are useful as viscosity index improvers for lubricating oils as described in US Patent No. 4,788,361.

US Patent No. 3,890,408 describes a process for preparing a block copolymer of the general formula A-B-C or (B-C)ₙ, where A is a non-elastomeric polymer block, B is an elastomeric polymer block from a conjugated diene, and C and optionally A are each a polymer block from a 1-alkyl-ethylene-carboxylic ester, which comprises preparing a polymer having at least one terminal dienyl anion by means of an anionic initiator, and then adding one or more 1-alkyl-ethylene carboxylic esters and continuing the polymerisation, characterised in that a compound of the general formula CH₂=CR₁R₂, where R₁ and R₂ are aryl or aralkyl groups, is added after the polymerisation of the conjugated diene into a polymer block of the desired molecular weight, to avoid polymer coupling (Column 2, lines 48 to 62).

The polymer block A may be prepared from one or more monoalkenyl aromatic compounds such as styrene, methylstyrene, chlorostyrene and alpha-methylstyrene. The preferred conjugated dienes for preparing polymer block B are isoprene and butadiene, whereas the preferred ester for preparing polymer block C is methyl methacrylate.

In Column 5, lines 31 and 32, it is stated that the block copolymer may be partly hydrogenated.

The block copolymers of US Patent No. 3,890,408 are said to be useful in the manufacture of glues and coatings particularly when dissolved in an organic solvent, elastomers, fibres, bicycle tyres, footwear, floor-covering, domestic articles and as carpet backing (Column 5, lines 35 to 40).

US Patent No. 4,246,374 discloses a method for producing a polymer containing imide units comprising reacting under substantially anhydrous conditions in an extruder an acrylic polymer with ammonia or a primary amine at a temperature of about 200 to 450°C, while applying subatmospheric pressure to at least one vent port of said extruder.

The acrylic polymer is said to be any polymer containing units derived from esters of acrylic or methacrylic acid. Whilst the acrylic polymer may contain units derived from other ethylenically unsaturated monomers such as styrene, acrylonitrile and butadiene, the most preferred polymers are those containing about 95 to 100 per cent by weight of the (meth)acrylic acid esters. There is no teaching in US Patent No. 4,246,374 of the structure or composition of acrylic polymers containing non-ester monomers.

The imide polymers of US Patent No. 4,246,374 have utility as moulding powders, pellets or granules for use in making moulded articles such as tail light lenses, toys and watch crystals (Column 6, lines 51 to 54).

It is stated in Column 6, lines 56 to 59 that the imide polymers can also be used as oil additives due to good viscosity characteristics, not adding to viscosity at low temperatures but thickening oil at high temperatures. The patent contains no data however which proves this statement.

US Patent No. 4,461,874 discloses block copolymers including a first sequence formed with monomeric units derived from conjugated dienes, preferably isoprene or 1,3-butadiene, or vinyl-substituted aromatic hydrocarbons other than alpha-methylstyrene, a second sequence formed with monomeric units derived from acrylic esters, preferably methyl methacrylate, and an intermediate sequence formed with monomeric units derived from alpha-methylstyrene to link the first and second sequences. The block copolymers, which are said to be particularly useful for the manufacture of adhesives, coatings and fibres, are prepared by successively polymerising, by anionic polymerisation, monomeric units derived from the group consisting of a conjugated diene and a vinyl-substituted aromatic hydrocarbon other than alpha-methylstyrene, monomeric units of alpha-methylstyrene, and monomeric units of acrylic esters.

EP-A-298 667 (The Dow Chemical Co.) discloses compositions useful as elastomers and adhesives comprising at least 90%w of a block polymer comprising in polymerised form at least one block (A) of a moiety selected from the group consisting of the hydrolysable C₂-C₅ alkyl esters of methacrylic acid; methacrylic acid; and ammonium, alkali metal, alkaline earth metal, aluminium, tin, zinc or nickel salts of methacrylic acid and at least one other block (B) of a different anionically polymerisable monomer other than methylmethacrylate. The latter may be a block copolymer of a conjugated diene, and is preferably a block copolymer containing one or more diene homopolymer blocks and one or more vinylidene aromatic monomer homopolymer blocks. The diene polymer blocks may be hydrogenated.

In Page 4, lines 6 to 15 of EP-A-298 667 it is stated that it is desirable that the diene polymer block B comprise homopolymer blocks of a monovinylidene aromatic monomer and diene homopolymer blocks such that the monovinylidene aromatic monomer homopolymer blocks are interposed between the A blocks and the diene homopolymer blocks or hydrogenated derivatives thereof. The resulting block polymers of the invention therefore correspond to the formula: 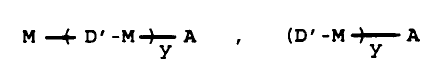 or 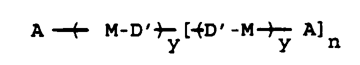 wherein D' is a diene homopolymer block or a hydrogenated derivative thereof, M is a monovinylidene aromatic monomer homopolymer block, A is as defined above, n is 0 to 6 and y is a number greater than 0 that is equal to the average number of repeating diene and monovinylidene aromatic monomer homopolymer blocks.

US Patent No. 5,166,274 (The Dow Chemical Co.) discloses block polymers useful as surfactants, elastomers and adhesives comprising in polymerised form one or more conjugated diene or hydrogenated diene moieties and one or more moieties selected from the group consisting of hydrolysable esters of methacrylic acid having from 2 to 20 carbons in the ester group, methacrylic acid and salts of methacrylic acid.

Examples of such block polymers include those having the formulae: 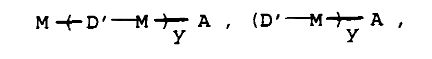 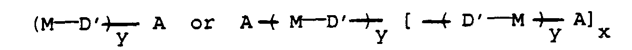 wherein D' is a diene homopolymer block or a hydrogenated derivative thereof, M is a monovinylidene aromatic monomer homopolymer block, A is a polymer comprising one or more moieties selected from the group consisting of hydrolysable esters of methacrylic acid having from 2 to 20 carbons in the ester group, methacrylic acid and salts of methacrylic acid, x is a number from 0 to 3 equal to the average number of branches in the block polymer, and y is a number greater than 0 that is equal to the average number of repeating diene and monovinylidene aromatic monomer homopolymer blocks.

There is no specific teaching, in either one of EP-A-298 667 and US Patent No. 5,166,274 of the preparation of a block polymer of formula D'-M-A, particularly one in which D' is a hydrogenated diene homopolymer block and A is a methacrylic acid ester polymer block.

Indeed, it will be noted in Examples 1 to 7 of US Patent No. 5,166,274 (which correspond respectively to Examples 1 to 7 in EP-A-298 667), that the most preferred block polymers are those containing polymer blocks of (unhydrogenated) isoprene and of methacrylic acid or a salt or ester derivative thereof (see Examples 1, 2, 5, 6 and 7).

Although Examples 3 and 4 describe the preparation of block polymers which additionally contain styrene, these correspond to the formula A-M-D-M-A wherein A, M and D represent the polymerised monomers t-butyl methacrylate, styrene and isoprene. In both of Examples 3 and 4, the polymer block D is unhydrogenated.

It has now surprisingly been found that certain linear block copolymers possess advantageous viscosity-index improving properties.

Therefore, in accordance with the present invention, there is provided a polymer comprising polymerised blocks of a hydrogenated conjugated diene (B), a vinylarene (A), and a methacrylate (M) or an amide or imide derivative thereof, wherein the polymer is a mixture of first molecules having a polymerised block structure B-A-M and from greater than 10% up to 50% by weight of second molecules having a coupled block structure B-A-M-A-B.

Linear polymers having the block structure hydrogenated conjugated diene-vinylarene-methacrylate (B-A-M), e.g. hydrogenated isoprene-styrene-t-butyl methacrylate, are useful dispersant viscosity-index improvers after the alkyl methacrylate block is converted to amide or imide groups. Such polymers having the block structure B-A-M are for instance known from EP-A-0 458 379. Coupling of some of the methacrylate blocks during manufacturing results in a coupled polymer component having the block structure hydrogenated conjugated diene-vinylarene-methacrylate-vinylarene-hydrogenated conjugated diene (B-A-M-A-B).

The molecular weights of the blocks are selected to produce uncoupled and coupled linear polymers which are useful dispersant viscosity-index improvers after conversion of the alkyl methacrylate block to amide or imide groups. The dispersant viscosity-index improvers of the invention exhibit improved low temperature properties and improved shear stability.

The dispersant viscosity-index improvers of the present invention may be prepared by reacting a primary or secondary amine with a base block copolymer of a hydrogenated conjugated diene, a vinylarene, and a methacrylate. The base block copolymer has the block structure hydrogenated conjugated diene-vinylarene-methacrylate (B-A-M).

The vinylarene employed in the base block copolymer is preferably a compound of up to 18 carbon atoms, preferably having an alkenyl group of up to 6 carbon atoms attached to a ring carbon atom of an aromatic ring system of up to 2 aromatic rings. Such vinylarenes are illustrated by styrene, 2-butenylnaphthalene, 4-t-butoxystyrene, 3-isopropenylbiphenyl, and isopropenylnaphthalene. The preferred vinylarenes have an alkenyl group of up to 3 carbon atoms attached to a benzene ring as exemplified by styrene and styrene homologues such as styrene, α-methylstyrene, p-methylstyrene, and α,4-dimethylstyrene. Styrene and α-methylstyrene are particularly preferred vinylarenes, especially styrene.

The vinylarene block is preferably at least 80% by weight polymerised vinylarene and is most preferably homopolymeric.

The hydrogenated conjugated diene employed in the base block copolymer preferably comprises at least 90% by weight of the polymerised conjugated diene. Most preferably, the conjugated diene block is homopolymeric. The conjugated dienes preferably have up to 8 carbon atoms. Illustrative of such conjugated dienes are 1,3-butadiene (butadiene), 2-methyl-1,3-butadiene (isoprene), 1,3-pentadiene (piperylene), 1,3-octadiene, and 2-methyl-1,3-pentadiene. Preferred conjugated dienes are butadiene and isoprene, particularly isoprene.

The methacrylate block employed in the base block copolymer is preferably a methacrylate block or segment comprising at least two adjacent units of a polymerised (1-methyl-1-alkyl)- alkyl methacrylate. Homopolymeric methacrylate blocks of (1-methyl-1-alkyl)alkyl methacrylates are most preferred.

Examples of (1-methyl-1-alkyl)alkyl methacrylates useful in the present invention are compounds of the general formula: 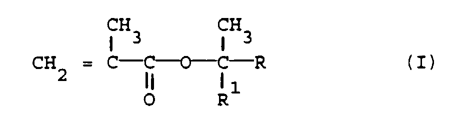 where each of R and R¹ represents a C₁-C₁₀ alkyl group.

The preferred methacrylates have the structure: 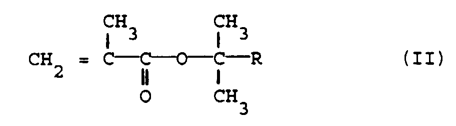 wherein R is a C₁-C₁₀ alkyl group, most preferably a methyl group. Adjacent (1-methyl-1-alkyl)alkyl ester groups convert to stable anhydride rings having six members after upon heating of the polymer to a temperature in excess of 180°C. Thermal conversion to anhydride rings tends to occur during reaction of the base polymers with amines and facilitates formation of amide or imide groups.

Examples of the preferred methacrylates of formula II include:
1,1-dimethylethyl-α-methacrylate,
(t-butyl methacrylate), and
1,1-dimethylpropyl-a-methacrylate
(t-pentyl methacrylate).

The most preferred alkyl ester is t-butyl methacrylate which is commercially available in high purity from Mitsubishi-Rayon, Japan. Less pure t-butyl methacrylate is available from Monomer, Polymer and Dajac and can be used if passed through a column of alumina and 13X zeolite to remove methacrylic acid and t-butyl alcohol. The preferred zeolites have a cavity size no less than 1 nm (10 Angstroms) such as Zeolite 13X which has the formula

Na₈₆(AlO₂)₈₆(SiO₂)₁₀₆.267H₂O.

The present invention further provides a process for the preparation of a polymer according to the invention which comprises the steps of:
(i) anionically polymerising conjugated diene (B), vinylarene (A) and methacrylate (M) monomers to form a polymer which is a mixture of first molecules having a polymerised block structure B-A-M and second molecules having a coupled block structure B-A-M-A-B,
(ii) selectively hydrogenating the polymer such that at least 90% of aliphatic unsaturation and no more than 5% of aromatic unsaturation are hydrogenated; and, if desired,
(iii) converting at least a proportion of the polymerised methacrylate monomers to amide or imide groups.

The base block copolymers are anionically polymerised in the presence of a metal alkyl initiator, preferably an alkali metal alkyl. The use of such initiators in anionic polymerisations is well known and conventional. A particularly preferred initiator is sec-butyllithium.

The polymerisation of the vinylarenes takes place in a non-polar hydrocarbon solvent such as cyclohexane or in mixed polar/non-polar solvents, e.g., mixtures of cyclohexane and an ether such as tetrahydrofuran or diethyl ether. Suitable reaction temperatures are from 20°C to 80°C and the reaction pressure is sufficient to maintain the mixture in the liquid phase. The resulting product includes a living poly(vinylarene) block having a terminal organometallic site which is used for further polymerisation.

The polymerisation of the conjugated diene takes place in a solvent selected to control the mode of polymerisation. When the reaction solvent is non-polar, the desired degree of 1,4 polymerisation takes place whereas the presence of polar material in a mixed solvent results in an increased proportion of 1,2 polymerisation. Polymers resulting from 6% to 95% of 1,2 polymerisation are of particular interest for branched conjugated dienes such as isoprene.

Polymerisation of the methacrylates takes place in the mixed solvent containing the polymerised conjugated diene at a temperature from -80°C to 100°C, preferably from 10°C to 50°C.

Subsequent to production of the methacrylate block, the polymerisation is terminated by either reaction with a protic material, typically an alkanol such as methanol or ethanol. The polymers are then recovered by well known procedures such as precipitation or solvent removal.

The polymers produced by the above procedures will undergo some coupling through an ester group on an adjacent living molecule prior to termination unless the living polymer chains are first end-capped with a unit of 1,1-diphenylethylene or ∝-methylstyrene. For the present invention, such coupling is acceptable since the coupled product is also useful as a viscosity-index improver. Coupling of some of the methacrylate blocks during manufacturing results in a coupled polymer component having the block structure hydrogenated conjugated diene-vinylarene-meth-acrylate-vinylarene-hydrogenated conjugated diene (B-A-M-A-B). Preferably from 11% to 45% by weight, and especially from 15% to 45% by weight of the polymer was the coupled structure B-A-M-A-B.

The molecular weights of the blocks are selected to produce uncoupled and coupled linear polymers which are useful dispersant viscosity-index improvers after conversion of the alkyl methacrylate block to amide or imide groups.

The conjugated diene blocks have a peak molecular weight from 10,000 to 500,000 prior to any coupling, preferably from 10,000 to 200,000, more preferably from 30,000 to 200,000. The vinylarene blocks have a peak molecular weight from 1,000 to 50,000 prior to any coupling, preferably from 5,000 to 40,000, more preferably from 10,000 to 40,000. The non-coupled methacrylate blocks have a peak molecular weight from 200 to 10,000, preferably from 200 to 5,000, prior to conversion to amide or imide groups.

The base polymers are selectively hydrogenated to reduce the extent of unsaturation in the aliphatic portion of the polymer (aliphatic unsaturation) without substantially reducing the unsaturation of any aromatic portion (aromatic unsaturation) of the block copolymer. A number of catalysts, particularly transition metal catalysts, are capable of selectively hydrogenating the aliphatic unsaturation of a copolymer of an alkenyl aromatic compound and a conjugated diene, but the presence of the methacrylate block can make the selective hydrogenation more difficult. To selectively hydrogenate the aliphatic unsaturation it is preferred to employ a "homogeneous" catalyst formed from a soluble nickel compound and a trialkylaluminium. Nickel naphthenate or nickel octoate is a preferred nickel salt.

In the selective hydrogenation process, the base polymer is reacted in situ, or if isolated is dissolved in a suitable solvent such as cyclohexane or a cyclohexane-ether mixture and the resulting solution is contacted with hydrogen gas in the presence of the homogeneous nickel catalyst. Hydrogenation takes place at temperatures from 25°C to 150°C and hydrogen pressures from 15 psig (103.4 kPa) to 1000 psig (6894.8 kPa). Hydrogenation is considered to be complete when at least 90%, preferably at least 98%, of the carbon-carbon unsaturation of the aliphatic portion (aliphatic unsaturation) of the base polymer has been saturated, as can be determined by nuclear magnetic resonance spectroscopy. Under the conditions of the selective hydrogenation no more than 5% of the aromatic unsaturation and preferably even fewer of the units of the vinylarene blocks will have undergone reaction with the hydrogen. The selectively hydrogenated block polymer is recovered by conventional procedures such as washing with aqueous acid to remove catalyst residues and removal of the solvent and other volatiles by evaporation or distillation.

The amide or imide groups in the polymers of the invention may be produced by heating the base polymers to a temperature in excess of 180°C in the presence of a secondary, or preferably primary, amine. Heating is preferably conducted in an extruder having a devolatisation section to remove any volatile by-products.

Primary amines useful for adding dispersancy properties include those listed in Column 3, lines 40 to 56 of US Patent No. 4,246,374. The most preferred primary amine is 3-diethylaminopropylamine.

The polymers of the present invention are useful as (dispersant) viscosity-index improver additives in lubricating oils. Accordingly, the present invention further provides a lubricating oil composition comprising a major amount (more than 50%w based on the total composition) of a lubricating oil and a minor amount, preferably from 0.1 to 20%w, more preferably from 0.1 to 10%w, and especially from 0.2 to 5%w, based on the total composition, of a polymer according to the invention.

Suitable lubricating oils are natural, mineral or synthetic lubricating oils.

Natural lubricating oils include animal and vegetable oils, such as castor oil. Mineral oils comprise the lubricating oil fractions derived from crude oils, coal or shale, which fractions may have been subjected to certain treatments such as clay-acid, solvent or hydrogenation treatments. Synthetic lubricating oils include synthetic polymers of hydrocarbons such as polyalphaolefins; modified alkylene oxide polymers; and ester lubricants. These lubricating oils are preferably crankcase lubricating oils for spark-ignition and compression-ignition engines, but include also hydraulic lubricants, metal-working fluids and automatic transmission fluids.

Preferably the lubricating base oil component of the compositions according to the present invention is a polyalphaolefin oil, or a mineral lubricating oil or a mixture of mineral lubricating oils, such as those sold by member companies of the Royal Dutch/Shell Group under the designations "HVI", or "XHVI" (trade mark).

The viscosity of the lubricating base oils present in the compositions according to the present invention may vary within wide ranges, and is generally from 3 to 35mm²/s at 100°C.

The lubricating oil compositions of the present invention may further contain a number of other additives such as antioxidants, metal detergents such as (overbased) alkaline earth metal phenates, sulphonates and salicylates, ashless dispersants such as polyolefin-substituted succinimides, e.g. those described in GB-A-2,231,873, foam inhibitors, corrosion inhibitors, pour point depressants, friction modifiers, and extreme pressure/anti-wear additives such as zinc or sodium dithiophosphates.

The polymer of the invention can be added separately to the lubricating oil or it can be blended with other additives and added to the lubricating oil together. A preferred method of adding the polymer to the lubricating oil is first to prepare a concentrate of the polymer and then to add this concentrate in a calculated, desired amount to the lubricating oil.

The present invention still further provides the use of a polymer of the invention as a viscosity-index improver additive.

The present invention will be further understood from the following illustrative examples.

### Example 1

A two litre Büchi reactor was charged with 1500 ml of cyclohexane at 25°C and 80 g of isoprene monomer. Then impurities were titrated with sec-butyllithium. The temperature was increased to 60°C and 0.6 g of 12.11% sec-butyllithium was added to the mixture, and reacted for 30 minutes. Still at 60°C, 34.3 g of styrene monomer were added and reacted for 20 minutes. The temperature was decreased to 35°C and the styrene was reacted for another 20 minutes. Next 2.3 g of tert-butyl methacrylate (tBMA) was added at 50°C and allowed to react for 20 minutes. The reaction was killed with 0.09 ml of methanol prior to hydrogenation.

The polymer solution was then hydrogenated with a nickel catalyst composed of nickel octoate reduced by triethyl aluminium (Al/Ni = 2.3:1). The resulting product showed a 96.9% conversion of double bonds to single bonds in the isoprene block. Gel Permeation Chromatography (GPC) showed 42% coupled material (EP-S-tBMA-S-EP) in the product.

Following hydrogenation, the polymer was melt modified in a Brabender mixing head at 250°C for 3 minutes in the presence of a slight excess of a 50/50 mixture of oil and 3-diethylaminopropylamine. The resulting products showed complete conversion of the alkyl groups on the methacrylate block to amide groups.

### Example 2

The reactor was charged with 3.819 kg of cyclohexane and purged with nitrogen. To this was added 0.504 kg of isoprene monomer and the temperature was held at 30°C. The stirred mixture was titrated with sec-butyllithium and then 7.57 ml of sec-butyllithium was added to polymerise the isoprene. The isoprene was allowed to react for ten half-lives and then 137.06 g of styrene monomer were added. The reaction mixture was stirred for 10 half-lives and the temperature was brought to 35°C. Finally, 34.3 g of tert-butyl methacrylate were added and the reaction mixture was stirred for 30 minutes. The reaction was quenched with methanol and the product was hydrogenated with the nickel catalyst of Example 1. GPC indicated 38% coupled material in the product.

### Example 3

A two litre Büchi reactor was charged with 1500 ml of cyclohexane and 80 g of isoprene monomer. The stirred solution was titrated with approximately 1 ml of 12.11% sec-butyllithium. After titration the target amount of sec-butyllithium (0.60 g of 12.11% sec-butyllithium) was added and the isoprene was allowed to polymerise for 1 hour at 45°C. Then 34.3 g of styrene monomer were added and allowed to polymerise for 45 minutes, with the temperature being reduced to 25°C during the styrene polymerisation. When the styrene block finished polymerising 2.3 g of tert-butyl methacrylate monomer were added and allowed to react for 15 minutes. Then 0.05 ml of methanol was added to kill the reaction.

The polymer solution was then hydrogenated with the nickel catalyst of Example 1. The resulting product showed a 98.6% conversion of the double bonds in the isoprene block. GPC showed 18% coupled material in the product.

The t-butyl groups on the polymer were acidified in a toluene solution for 3 hours with a catalytic amount of para-toluene sulphonic acid. The acidified polymer was then reacted with 3-diethylaminopropylamine at a small stoichiometric excess. The amine salt of the polymer was then recovered by precipitation with methanol and dried in a vacuum oven. The amine salt of the polymer was then heated in the Brabender mixing head at 250°C for 3 minutes to form the amide derivative of the polymer.

### Example 4

The polymers of Examples 1, 2 and 3 together with a commercially available polymer having the structure hydrogenated isoprene-styrene (peak mol. wt 60,000-35,000) were formulated into SAE 5W-30 and 10W-40 oils for evaluation. The polymers were first blended in Exxon 100 NLP base oil at 5%w concentration using a Silverson mixer at 120°C to 130°C until the polymer was totally dissolved. A small amount of antioxidant was added to the concentrates to prevent thermal oxidation.

Fully formulated SAE 5W-30 and SAE 10W-40 oils were prepared from the above polymer concentrates, a standard additive package, "Acryloid" (trade mark) 155 pour point depressant (a polymethacrylate) and Exxon base stocks. "Acryloid" (trade mark) 155 pour point depressant was used at 0.5%w. Exxon 100 NLP base oil was used for the SAE 5W-30 oils. Exxon 100 NLP and Exxon 325 N base oils were used for the SAE 10W-40 oils. The SAE 5W-30 oils were blended to about 11 cSt (11 mm²/s) viscosity at 100°C and the cold cranking simulator (CCS) viscosity was measured at -25°C. The SAE 10W-40 oils were blended to about 14 cSt (14 mm²/s) viscosity at 100°C and a cold cranking simulator (CCS) viscosity of 3200 cP (3.2 Pa s) at -20°C.

The engine oil pumpability (TP1) at -25°C using the mini-rotary viscometer (ASTM D4684) and the high temperature high shear rate viscosity at 150°C at 1 x 10⁶ seconds ⁻¹ using the tapered bearing simulator (TBS) (ASTM D4683) were determined for each of the SAE 5W-30 and SAE 10W-40 formulated oils. The results obtained are shown in Tables 1 and 2 following.

**Table 1**

| **RHEOLOGY OF SAE 5W-30 FULLY FORMULATED OIL BLENDS** | | | | |
|---|---|---|---|---|
| | Commercial polymer | Polymer of Ex. 1 | Polymer of Ex. 2 | Polymer of Ex. 3 |
| Kinematic viscosity at 100°C, cSt (mm²/s) | 10.81 | 11.1 | 10.8 | 10.9 |
| CCS at -25°C, cP (x 10⁻³ Pa s) | 3120 | 3120 | 3056 | 3229 |
| TP1-MRV, cP (x 10⁻³ Pa s) | 15,678 | 15,561 | 13,916 | 15,213 |
| TBS, cP (x 10⁻³ Pa s) | 2.91 | 3.16 | 2.96 | 3.13 |

**Table 2**

| **RHEOLOGY OF SAE 10W-40 FULLY FORMULATED BLENDS** | | | | |
|---|---|---|---|---|
| | Commercial polymer | Polymer of Ex. 1 | Polymer of Ex. 2 | Polymer of Ex. 3 |
| Kinematic viscosity at 100°C, cSt (mm²/s) | 14.1 | 14.3 | 14.0 | 14.3 |
| CCS at -20°C, cP (x10⁻³ Pa s) | 3327 | 3072 | 3229 | 3313 |
| TP1-MRV, cP (x 10⁻³ Pa s) | 16,427 | 14,867 | 14,938 | 16,215 |
| TBS,cP (x 10⁻³ Pa s) | 3.51 | 3.76 | 3.53 | 3.88 |

The results in Tables 1 and 2 clearly demonstrate that the viscosity-index improvers of the invention have superior high temperature shear stability (higher TBS values).

### Example 5

A modified blotter spot dispersancy test was performed on each polymer of Examples 1 to 3 with known dispersant viscosity-index improver polymers used for comparison. A used engine oil from a test car programme was doped with 0.5%w, 1.0%w and 2%w of each of the polymers, as concentrates. The mixtures were stirred together, at room temperature, and spotted on "Millipore" (trade mark) 0.45 µm and 0.65 µm filter discs. The same samples were then heated to 50°C for 10 minutes, cooled and respotted on new filter discs. The candidates and controls all showed active dispersancy.

### Example 6

The polymers of Examples 1, 2 and 3 were further compared to commercial dispersant viscosity-index improvers with respect to low temperature performance. Table 3 shows SAE 5W-30 oil formulations made from commercial dispersant viscosity-index improvers. The cold cranking simulator (CCS) test results establish that the viscosity-index improvers of the invention provide lower viscosity at low temperatures.

**Table 3**

| **RHEOLOGY OF SAE 5W-30 FULLY FORMULATED BLENDS** | | |
|---|---|---|
| Dispersant VI improver | Kinematic viscosity at 100°C, cSt (mm²/s) | CCS at -25°C cP (x 10⁻³ Pa s) |
| "PARATONE" * 855 (an olefin copolymer) | 11.0 | 4142 |
| "ACRYLOID"* 954 (a polymethacrylate) | 10.8 | 3472 |
| "AMOCO" * 6565 (an olefin copolymer) | 10.7 | 3527 |
| "TLA"* 7200 (a dispersant olefin copolymer) | 10.8 | 3598 |
| Polymer of Ex. 1 | 11.1 | 3120 |
| Polymer of Ex. 2 | 10.8 | 3056 |
| Polymer of Ex. 3 | 10.9 | 3229 |
| SAE J300 specifications for 5W-30 oils | 9.3-12.5 | 3500 max. |

| | | |
|---|---|---|
| * trade mark | | |

## Claims

1. A polymer comprising polymerised blocks of a hydrogenated conjugated diene (B), a vinylarene (A), and a methacrylate (M) or an amide or imide derivative thereof, wherein the polymer is a mixture of first molecules having a polymerised block structure B-A-M and from greater than 10% up to 50% by weight of second molecules having a coupled block structure B-A-M-A-B.

2. A polymer according to claim 1, wherein the conjugated diene contains up to 8 carbon atoms.

3. A polymer according to claim 2, wherein the conjugated diene is butadiene or isoprene.

4. A polymer according to any one of claims 1 to 3, wherein the vinylarene contains up to 18 carbon atoms.

5. A polymer according to claim 4, wherein the vinylarene is styrene, alpha-methylstyrene, p-methylstyrene and alpha,4-dimethylstyrene.

6. A polymer according to any one of the preceding claims wherein the methacrylate is a compound of the general formula: 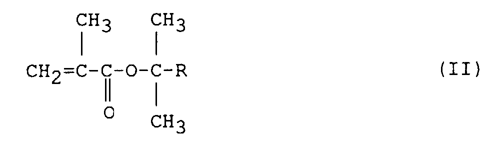 where R is a C₁-C₁₀ alkyl group.

7. A process for the preparation of a polymer as defined in any one of claims 1 to 6 which comprises the steps of:
(i) anionically polymerising conjugated diene (B), vinylarene (A) and methacrylate (M) monomers to form a polymer which is a mixture of first molecules having a polymerised block structure B-A-M and second molecules having a coupled block structure B-A-M-A-B,
(ii) selectively hydrogenating the polymer such that at least 90% of aliphatic unsaturation and no more than 5% of aromatic unsaturation are hydrogenated; and, if desired,
(iii) converting at least a proportion of the polymerised methacrylate monomers to amide or imide groups.

8. A lubricating oil composition comprising a major amount of a lubricating oil and a minor amount of a polymer as defined in any one of claims 1 to 6.

9. Use of a polymer as defined in any one of claims 1 to 6 as a viscosity-index improver additive.

## Patentansprüche

1. Polymerisat, enthaltend Polymerblöcke aus einem hydrierten konjugierten Dien (B), einem Vinylaren (A) und einem Methacrylat (M) oder einem davon abgeleiteten Amid- oder Imidderivat, bei dem es sich um ein Gemisch aus ersten Molekülen mit einem Polymerblockaufbau B-A-M sowie über 10 Gew.-% bis zu 50 Gew.-% an zweiten Molekülen mit einem gekoppelten Blockaufbau B-A-M-A-B handelt.

2. Polymerisat nach Anspruch 1, wobei das konjugierte Dien bis zu 8 Kohlenstoffatome enthält.

3. Polymerisat nach Anspruch 2, wobei es sich bei dem konjugierten Dien um Butadien oder Isopren handelt.

4. Polymerisat nach einem der Ansprüche 1 bis 3, wobei das Vinylaren bis zu 18 Kohlenstoffatome enthält.

5. Polymerisat nach Anspruch 4, wobei es sich bei dem Vinylaren um Styrol, alpha-Methylstyrol, p-Methylstyrol und alpha,4-Dimethylstyrol handelt.

6. Polymerisat nach einem der vorhergehenden Ansprüche, wobei es sich bei dem Methacrylat um eine Verbindung der allgemeinen Formel 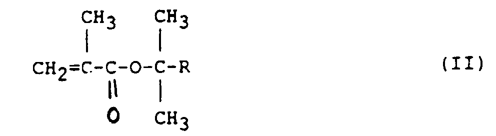 worin R eine C₁-C₁₀-Alkylgruppe bedeutet, handelt.

7. Verfahren zur Herstellung eines Polymerisats gemäß einem der Ansprüche 1 bis 6, bei dem man:
(i) konjugiertes Dien (B), Vinylaren (A) und Methacrylat (M) als Monomere zu einem Polymerisat, bei dem es sich um ein Gemisch aus ersten Molekülen mit einem Polymerblockaufbau B-A-M und zweiten Molekülen mit einem gekoppelten Blockaufbau B-A-M-A-B handelt, anionisch polymerisiert,
(ii) das Polymerisat derart selektiv hydriert, daß mindestens 90% der aliphatischen Ungesättigtheit und nicht mehr als 5% der aromatischen Ungesättigtheit hydriert werden; und gegebenenfalls
(iii) die polymerisierten Methacrylatmonomere zumindest teilweise in Amid- oder Imidgruppen überführt.

8. Schmierölzusammensetzung, enthaltend eine größere Menge eines Schmieröls und eine kleinere Menge eines Polymerisats gemäß einem der Ansprüche 1 bis 6.

9. Verwendung eines Polymerisats gemäß einem der Ansprüche 1 bis 6 als Viskositätsindexverbesserer-Additiv.

## Revendications

1. Polymère comprenant des séquences polymérisées d'un diène conjugué hydrogéné (B), d'un vinylarène (A) et d'un méthacrylate (M) ou d'un dérivé du type amide ou imide de celui-ci, où le polymère est un mélange de premières molécules possédant une structure séquencée polymérisée B-A-M et depuis plus de 10 % jusqu'à 50 % en poids de secondes molécules possédant une structure séquencée couplée B-A-M-A-B.

2. Polymère suivant la revendication 1, caractérisé en ce que le diène conjugué contient jusqu'à 8 atomes de carbone.

3. Polymère suivant la revendication 2, caractérisé en ce que le diène conjugué est le butadiène ou l'isoprène.

4. Polymère suivant l'une quelconque des revendications 1 à 3, caractérisé en ce que le vinylarène contient jusqu'à 18 atomes de carbone.

5. Polymère suivant la revendication 4, caractérisé en ce que le vinylarène est le styrène, l'alpha-méthylstyrène, le p-méthylstyrène et l'alpha,4-diméthylstyrène.

6. Polymère suivant l'une quelconque des revendications précédentes, caractérisé en ce que le méthacrylate est un composé de la formule générale : 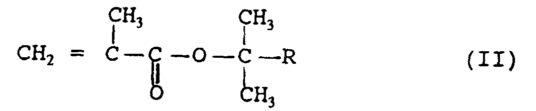 dans laquelle R représente un radical alkyle en C₁ à C₁₀.

7. Procédé de préparation d'un polymère tel que défini dans l'une quelconque des revendications 1 à 6, caractérisé en ce qu'il comprend les étapes consistant à :
(i) anioniquement polymériser les monomères du type diène conjugué (B), vinylarène (A) et méthacrylate (M) pour former un polymère qui est un mélange de premières molécules possédant une structure séquencée polymérisée B-A-M et de secondes molécules possédant une structure séquencée couplée B-A-M-A-B,
(ii) sélectivement hydrogéner le polymère en sorte qu'au moins 90 % d'insaturation aliphatique et pas plus de 5 % d'insaturation aromatique soient hydrogénés et, si on le souhaite,
(iii) convertir au moins une partie des monomères du type méthacrylate polymérisés en radicaux amide ou imide.

8. Composition d'huile lubrifiante comprenant une proportion majeure d'une huile lubrifiante et une proportion mineure d'un polymère tel que défini dans l'une quelconque des revendications 1 à 6.

9. Utilisation d'un polymère suivant l'une quelconque des revendications 1 à 6 à titre d'additif d'amélioration de l'indice de viscosité.
